(19) Europäisches Patentamt
European Patent Office
Office européen des brevets

(11) **EP 3 942 756 B1**

(12) **EUROPEAN PATENT SPECIFICATION**

(45) Date of publication and mention
of the grant of the patent:
**15.11.2023 Bulletin 2023/46**

(21) Application number: **19713409.1**

(22) Date of filing: **20.03.2019**

(51) International Patent Classification (IPC):
*H04L 47/24* (2022.01)     *H04L 45/125* (2022.01)
*H04L 41/5003* (2022.01)     *H04L 41/5009* (2022.01)
*H04L 43/0882* (2022.01)     *H04L 41/04* (2022.01)
*H04L 41/0803* (2022.01)     *H04L 41/142* (2022.01)
*H04L 41/16* (2022.01)     *H04L 43/0876* (2022.01)

(52) Cooperative Patent Classification (CPC):
**H04L 47/24; H04L 41/04; H04L 41/5003;**
**H04L 41/5009; H04L 43/0882; H04L 45/125;**
H04L 41/0803; H04L 41/0895; H04L 41/142;
H04L 41/16; H04L 41/40; H04L 43/0876;
H04L 43/20

(86) International application number:
**PCT/EP2019/056990**

(87) International publication number:
**WO 2020/187417 (24.09.2020 Gazette 2020/39)**

(54) **METHODS, APPARATUS AND COMPUTER PROGRAMS FOR CONFIGURING A TELECOMMUNICATION NETWORK**

VERFAHREN, VORRICHTUNG UND COMPUTERPROGRAMME ZUR KONFIGURIERUNG EINES TELEKOMMUNIKATIONSNETZWERKS

PROCÉDÉS, APPAREILS ET PROGRAMMES INFORMATIQUES POUR LA CONFIGURATION D'UN RÉSEAU DE TÉLÉCOMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.01.2022 Bulletin 2022/04**

(73) Proprietor: **Telefonaktiebolaget LM Ericsson (publ)**
**164 83 Stockholm (SE)**

(72) Inventors:
• **FIASCHI, Giovanni**
**19248 Sollentuna (SE)**
• **SOLDATI, Pablo**
**17073 Solna (SE)**
• **LIN, Yun**
**Beijing, 100062 (CN)**

(74) Representative: **Ericsson Patent Development Torshamnsgatan 21-23 164 80 Stockholm (SE)**

(56) References cited:
**US-A1- 2009 279 550    US-A1- 2011 235 653**

• **KIN-WAH KWONG ET AL: "Balancing performance, robustness and flexibility in routing systems", IEEE TRANSACTIONS ON NETWORK AND SERVICE MANAGEMENT, IEEE, US, vol. 7, no. 3, 1 September 2010 (2010-09-01), pages 186-199, XP011317481, ISSN: 1932-4537**

**Description**

Technical field

Embodiments of the present disclosure relate to telecommunication networks, and particularly relate to methods, apparatus and computer program products for configuring a telecommunication network in a manner which accounts for different classes of traffic which flows over the telecommunication network.

Background

A definition of the criticality of a network resource as a function of its usage (traffic load, in the case of telecommunications networks) may be useful in several contexts.

A main use case relates to traffic optimization applications, where the traffic is redirected from more critical (or more stressed) resources towards less critical (or less stressed) routes. For example, a paper by Junjie Zhang et al ("Optimizing Network Performance using Weighted Multipath Routing", International Conference on Computer Communications and Networks, 2012) describes a method which analogizes the packet delay over a network link (which varies asymptotically towards the link capacity) to the criticality of that network link. Although the relationship of the packet delay over a link to the usage of that link is not proportional, in general the higher the usage, the higher the packet delay. The method then seeks to minimize the sum of packet delay over all the links in the network to improve the operation of the network as a whole.

Other use cases may collect statistics on the criticality of the network to identify links in the network which act as bottlenecks, where high levels of criticality occur more frequently than other links. These bottleneck links may be identified as candidates for upgrade.

The definition of criticality is further complicated if the traffic includes differentiated classes of service, also referred to as quality of service (QoS). By this mechanism, each data packet is associated with a particular class of service, which may be indicated in a header (e.g., an IP header) of the data packet. Transmission of the data packets of a link or a set of links may then be scheduled based on their class of service. For example, each class of service may have or be associated with a particular priority value, such that data packets having a class of service with a relatively high priority value are scheduled for transmission prior to or in preference to data packets having a class of service with a relatively low priority value.

This mechanism leads to a first problem that different traffic classes experience different treatment in the network, meaning that their criticality may not be the same even if the same resource is considered. For example, a link may be saturated by best-effort traffic (which might then experience significant delay). However, a modest amount of high-priority traffic may be scheduled in preference to the best-effort traffic, and therefore cross the link without issues (e.g., without delay). The high-priority traffic therefore experiences lower criticality than the best-effort traffic.

Second, data packets belong to one class may affect data packets belong to another class (e.g., high-priority data stealing bandwidth from low-priority data), so the criticality of a class may need to take into account information related to other classes.

Third, it is desirable to define a mechanism for comparing the criticality of different classes which takes account of their relative importance or priority.

Document by KIN-WAH KWONG ET AL: "Balancing performance, robustness and flexibility in routing systems",IEEE TRANSACTIONS ON NETWORK AND SERVICE MANAGEMENT, IEEE, US, vol. 7, no. 3, 1 September 2010 (2010-09-01), pages 186-199, XP011317481, ISSN: 1932-4537, discloses determining overall link critcality in order to produce a global ordering of critical links.

Summary

It is an object of embodiments of the disclosure to overcome these and other problems in the art.

The present invention is defined by the independent claims. Further embodiments are set forth in the dependent claims.

One aspect of the claimed invention provides a method for configuring a telecommunication network. The telecommunication network comprises a plurality of nodes, with pairs of nodes being connected by respective links and each link having a respective link capacity. Traffic directed over the telecommunication network is associated with one of a plurality of traffic classes, with each traffic class having a respective priority value. The method comprises: a) determining an amount of traffic associated with each traffic class flowing on a first link of the telecommunication network; b) for each traffic class, determining a traffic class link capacity, the traffic class link capacity for a particular traffic class varying as a function of a difference between the link capacity of the first link and capacity allocated to other traffic classes on the first link according to a scheduling algorithm based on the priority value of the particular traffic class and the priority values of the other traffic classes; c) for each traffic class, determining a traffic class link criticality of the first link as a function of the respective traffic class link capacity and an amount of traffic associated with the traffic class flowing on the first link; d) determining one or more overall traffic class link criticalities for the first link, the overall traffic class link criticality for a particular traffic class for the first link varying as a function of a sum of the traffic class link criticalities for one or more traffic classes for the first link, the one or more traffic classes including at least the particular traffic class and each traffic class of the plurality of traffic classes for which the traffic class link capacity varies by virtue of the scheduling algorithm and the priority value associated with the particular traffic class; e) repeating steps a) to d) for one or more second links of the telecommunication network; and f) configuring the telecommunication network based on the overall traffic class link criticalities for the first link and the one or more second links.

Further aspects provide apparatus and machine-readable mediums for performing the method described above. The claimed invention provides a network management node for configuring a telecommunication network. The telecommunication network comprises a plurality of nodes, with pairs of nodes being connected by respective links and each link having a respective link capacity. Traffic directed over the telecommunication network is associated with one of a plurality of traffic classes, with each traffic class having a respective priority value. The network management node comprises processing circuitry and a non-transitory machine-readable medium storing instructions which, when executed by processing circuitry, cause the network management node to: a) determine an amount of traffic associated with each traffic class flowing on a first link of the telecommunication network; b) for each traffic class, determine a traffic class link capacity, the traffic class link capacity for a particular traffic class varying as a function of a difference between the link capacity of the first link and capacity allocated to other traffic classes on the first link according to a scheduling algorithm based on the priority value of the particular traffic class and the priority values of the other traffic classes; c) for each traffic class, determine a traffic class link criticality of the first link as a function of the respective traffic class link capacity and an amount of traffic associated with the traffic class flowing on the first link; d) determine one or more overall traffic class link criticalities for the first link, the overall traffic class link criticality for a particular traffic class for the first link varying as a function of a sum of the traffic class link criticalities for one or more traffic classes for the first link, the one or more traffic classes including at least the particular traffic class and each traffic class of the plurality of traffic classes for which the traffic class link capacity varies by virtue of the scheduling algorithm and the priority value associated with the particular traffic class; e) repeat steps a) to d) for one or more second links of the telecommunication network; and f) configure the telecommunication network based on the overall traffic class link criticalities for the first link and the one or more second links.

Another aspect of the claimed invention provides a computer program product comprising a non-transitory machine-readable medium storing instructions for execution by a network management. The network management node is coupled to a telecommunications network. The telecommunication network comprises a plurality of nodes, with pairs of nodes being connected by respective links and each link having a respective link capacity. Traffic directed over the telecommunication network is associated with one of a plurality of traffic classes, with each traffic class having a respective priority value. The instructions, when executed by processing circuitry of the network management node, cause the network management node to: a) determine an amount of traffic associated with each traffic class flowing on a first link of the telecommunication network; b) for each traffic class, determine a traffic class link capacity, the traffic class link capacity for a particular traffic class varying as a function of a difference between the link capacity of the first link and capacity allocated to other traffic classes on the first link according to a scheduling algorithm based on the priority value of the particular traffic class and the priority values of the other traffic classes; c) for each traffic class, determine a traffic class link criticality of the first link as a function of the respective traffic class link capacity and an amount of traffic associated with the traffic class flowing on the first link; d) determine one or more overall traffic class link criticalities for the first link, the overall traffic class link criticality for a particular traffic class for the first link varying as a function of a sum of the traffic class link criticalities for one or more traffic classes for the first link, the one or more traffic classes including at least the particular traffic class and each traffic class of the plurality of traffic classes for which the traffic class link capacity varies by virtue of the scheduling algorithm and the priority value associated with the particular traffic class; e) repeat steps a) to d) for one or more second links of the telecommunication network; and f) configure the telecommunication network based on the overall traffic class link criticalities for the first link and the one or more second links.

Brief description of the drawings

For a better understanding of examples of the present disclosure, and to show more clearly how the examples may be carried into effect, reference will now be made, by way of example only, to the following drawings in which:

Figure 1 is a schematic diagram of a telecommunications network;

Figure 2 is a schematic diagram of a traffic allocation system according to embodiments of the disclosure;

Figure 3 is a flowchart showing a method according to embodiments of the disclosure;

Figure 4 is a schematic diagram of packet scheduling according to embodiments of the disclosure;

Figures 5a and 5b are graphs showing the variation of traffic class link criticality with traffic class link utilization according to embodiments of the disclosure;

Figure 6 is a flowchart showing a method of allocating traffic to paths through a network according to embodiments of the disclosure;

Figures 7a and 7b show the allocation of traffic to different through the network according to two examples;

Figure 8 is a flowchart showing a method of identifying bottlenecks in the network according to embodiments of the disclosure; and

Figure 9 is a schematic diagram of a network management node according to embodiments of the disclosure.

Detailed description

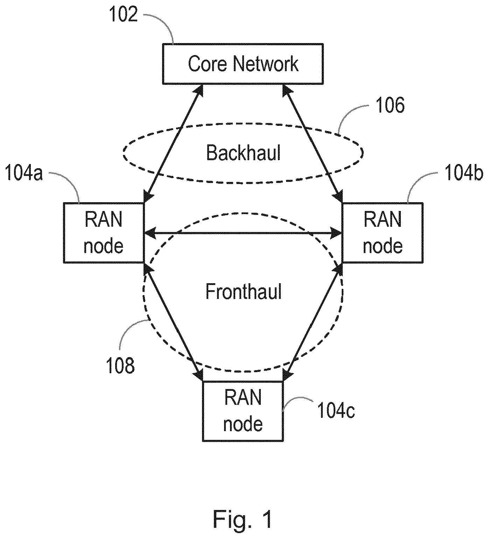

**Figure 1** shows a telecommunications network 100 in which embodiments of the disclosure may be implemented according to one example.

The network 100 may implement any suitable standard for the provision of radio communications. For example, the network 100 may implement a cellular telecommunications standard, such as those which have been developed, or are being developed, or will be developed, by the 3rd Generation Partnership Project (3GPP). Such standards include Global System for Mobile Communications (GSM) including General Packet Radio Service (GPRS) and Enhanced Data Rates for GSM Evolution (EDGE), Universal Mobile Telecommunications Systems (UMTS) including High Speed Packet Access (HSPA), Long Term Evolution (LTE) including LTE Advanced and LTE Advanced Pro, and the fifth generation (5G) standard currently under development, New Radio (NR).

The network 100 comprises a core network 102 and a radio access network (RAN) comprising a plurality of RAN nodes 104a, 104b, 104c (collectively 104). One or more of the RAN nodes 104 are connected to the core network 102 via a backhaul network 106. The RAN nodes 104 are connected to each other via a fronthaul network 108. Aspects of the disclosure may apply to any part of a telecommunications network.

The RAN nodes 104 may comprise base stations, nodeBs, eNodeBs or gNodeBs (the latter being the nomenclature currently used in the developing 5G standard). It will further be appreciated by those skilled in the art that the functions of RAN nodes may be distributed across multiple entities and/or multiple sites. Not all of those entities may have connectivity to the core network 102. For example, the functions of a RAN node may be distributed between a central unit (CU) and one or more distributed units (DUs) also known as Radio Units (RUs).

The fronthaul network 108 thus provides connectivity between nodes 104 of the radio access network. Such connectivity may be required in multiple scenarios. For example, while in a dual connectivity mode, a user equipment (UE) may have multiple connections to RAN nodes 104 active at the same time (e.g. multiple DUs and/or multiple base stations). Close co-ordination may be required between the RAN nodes 104 to prevent collision of transmissions to the UE, duplication of transmissions, etc. In other examples, the functions of RAN nodes may be distributed or split across multiple entities or sites, with the fronthaul network 108 providing connectivity between those distributed entities and/or sites.

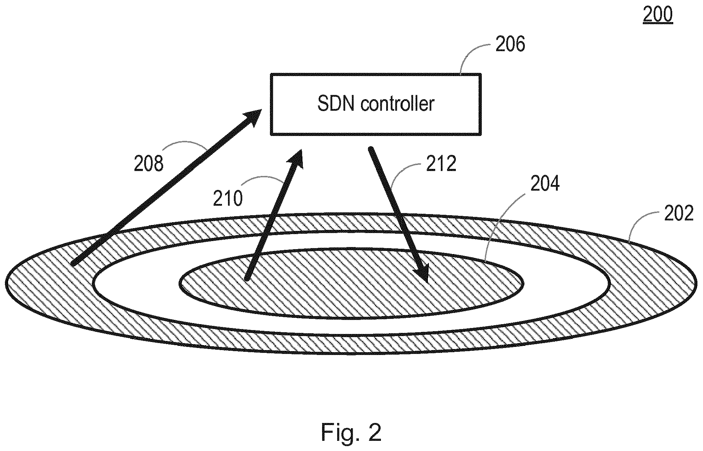

**Figure 2** is a schematic diagram of a system 200 according to embodiments of the disclosure. The system 200 comprises a client network 202 and a transport network 204 providing connectivity for the client network 202. In one particular embodiment, the client network 202 may comprise a radio access network such as that described above with respect to Figure 1, while the transport network 204 may comprise the fronthaul network 108. However, in other embodiments, the embodiments of the disclosure may allocate traffic for any telecommunications network.

The transport network 204 comprises a plurality of nodes coupled to each other via respective links. A node may be connected to any number of other nodes of the network 204. In one example, the transport network 204 may utilize optical communication techniques, with the nodes comprising optical switches and/or other hardware and the links comprising optical links such as optical fibres.

A management node 206 for the system 200 is communicatively coupled to both the client network 202 and the transport network 204. The management node 206 may be a software defined networking (SDN) controller or SDN function, for example. The management node 206 is operative to configure the network according to embodiments of the disclosure. For example, in one embodiment, the management node 206 is operative to receive connectivity demands from the client network 202, and allocate traffic for those connectivity demands to one or more paths through the transport network 204. Alternatively or additionally, the management node 206 may be operative to identify bottlenecks in the transport network 204 and so identify nodes or links which require maintenance or upgrade.

In step 210, the management node 206 obtains topology information for the transport network 204. For example, the topology information may comprise one or more of: identities of a plurality of nodes in the network; an indication of the links between respective pairs of the plurality of nodes (e.g., an indication as to which node identities are connected to which other node identities); and an indication of the capacity of each link and/or node. The topology information may be visualized as a graph of nodes interconnected by links. The management node 206 may also obtain an indication of a scheduling algorithm employed in each node.

The management node 206 may further obtain, in step 210, an indication of the traffic usage over each link of the transport network 204 in each of a plurality of traffic classes. That is, those skilled in the art will appreciate that each data packet transmitted over the network may be associated with a particular traffic class corresponding to a particular class or quality of service (QoS). An indication of the traffic class may be contained within a header of the data packet, such as the IP header. For example, the differentiated services mechanism (DiffServ) utilizes a differentiated services code point (DSCP) to define the particular traffic class of the data packet.

Each traffic class is subject to different processing within the network. For example, each traffic class may have or be associated with a particular priority value, such that data packets having a traffic class with a relatively high priority value are scheduled for transmission over a link prior to or in preference to data packets having a traffic class with a relatively low priority value. This scheduling mechanism is discussed in more detail below.

Note that the traffic usage for a particular traffic class over each link will be a sum of the traffic belonging to the traffic class from all paths through the network 204 which utilize that link.

Optionally, in step 208, the management node 206 obtains, from the client network 202, a plurality of demands for connectivity between nodes of the client network 202 or between attachment points of the transport network. Thus each connectivity demand may comprise identities of a first node (e.g. a source or ingress node) and a second node (e.g., a destination or egress node), with traffic to be routed between those nodes via the transport network 204. The connectivity demand may further define a traffic class associated with the traffic. Note that step 208 may be relevant to embodiments in which traffic is allocated to the transport network 204 by the SDN controller 206.

Each connectivity demand may further specify one or more constraints to be satisfied by the routing through the transport network 204. For example, the connectivity demand may specify a maximum latency to be associated with the routing. In this case, the constraint is satisfied by a particular path through the network 204 if the total latency of the path is less than the maximum latency. In examples where the transport network 204 comprises a fronthaul network (such as the network 108 described above with respect to Figure 1), the maximum latency may be relatively short, e.g., tens of microseconds. In this context, the constraint may be specified by the user or client associated with the connectivity demand. In other embodiments, each connectivity demand may alternatively or additionally be associated with a constraint which is specified by an operator of the transport network 204. Such operator-specified constraints may relate to one or more of: a maximum light path before optical-to-electrical conversion; a maximum number of electro-optic converters in the path (or the maximum number of electro-optic converters per unit length in the path); a maximum number of crossed nodes in the path; and a maximum number of segments used to define the path.

Each connectivity demand may further be associated with or comprise an indication of the traffic usage for that connectivity demand (e.g., an amount of traffic which is to use the connectivity). The traffic may be an expected amount of traffic or a measured amount of traffic for the demand. For example, the traffic usage per demand may be measured by the client or the management node 204 where paths for the connectivity demand have already been established for a period of time (e.g. when the process described herein is used to update existing traffic allocations). The traffic usage may be an average of the traffic usage measured over a particular time window, for example. Thus, the management node may additionally receive in step 208 an indication of an amount of traffic flowing for each connectivity demand.

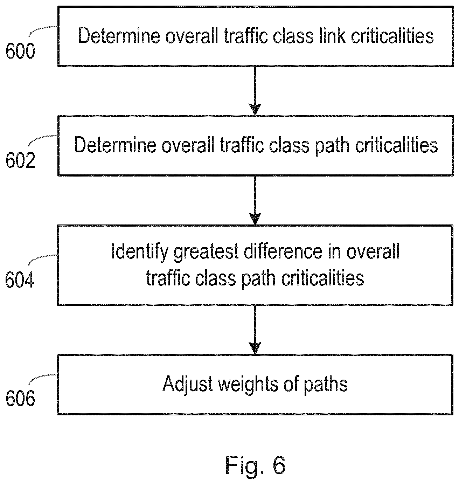

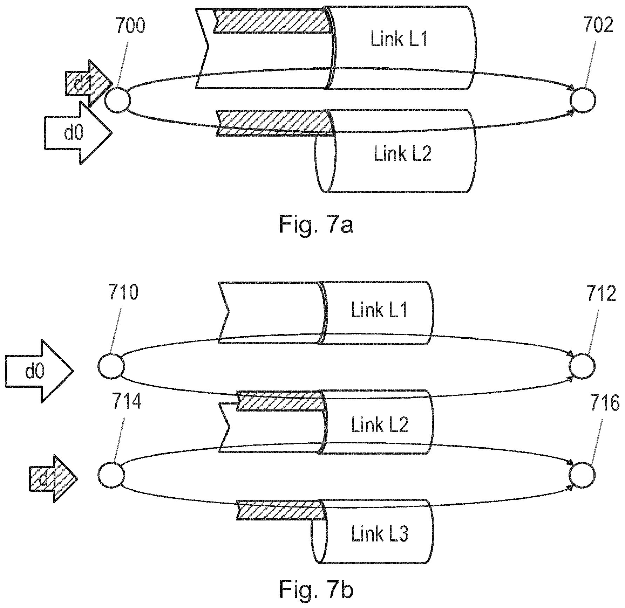

Optionally, in step 212, the management node computes one or more paths satisfying the constraints for each connectivity demand, and determines weights according to which traffic for each connectivity demand should be allocated to each of the computed paths. In particular, embodiments of the disclosure provide for updating of the weights according to which traffic for each connectivity demand is allocated to each of the computed paths. These paths and their respective weights are provided to the transport network 204, and particularly to the first nodes (e.g., the source or ingress nodes), so that traffic for each demand can be allocated between one or more paths in accordance with the weights. Further detail regarding this aspect of the disclosure is provided below, particularly with respect to Figures 6, 7a and 7b.

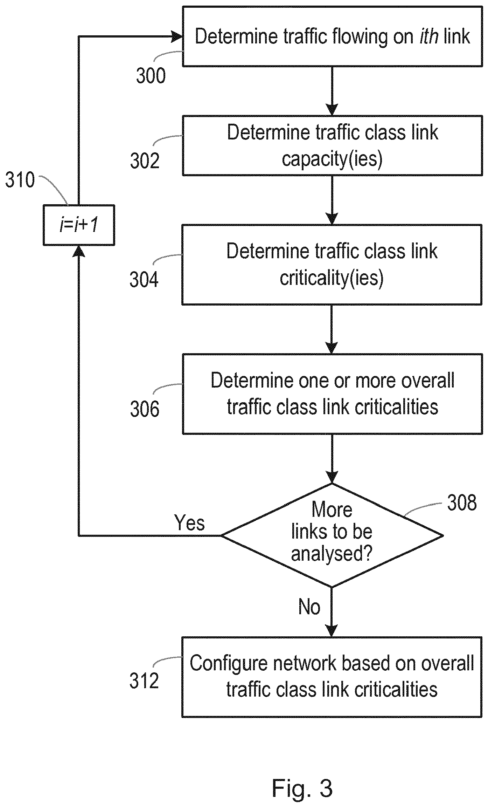

**Figure 3** is a flowchart of a method for configuring a telecommunication network according to the claimed invention. The method may be performed in a management node for the telecommunication network, such as the SDN controller 206 described above with respect to Figure 2.

The method shown in Figure 3 provides a mechanism for defining the "criticality" of a particular link, in a way which takes into account the traffic classes of the traffic flowing over the link. The criticality of a link varies as a function of the usage of that link, where the usage is defined as the ratio of the amount of traffic flowing over the link to the capacity of the link; a higher usage will result in a higher criticality, and vice versa. However, certain criticality functions may take account of the intuitive principle that a link whose usage is below 1 is not significantly "critical". For example, data packets flowing over a link with a usage of 0.5 are unlikely to experience significant delay or be dropped; in other words, the criticality may be less than 0.5. Various criticality functions are discussed below.

A link has a certain capacity $c$, which may be expressed as a rate of traffic flow (e.g., bits per second). Without considering differentiated classes of service, the link carries a certain amount of measurable traffic $t$, which may also be expressed as a rate of traffic flow (e.g., bits per second). Still without considering differentiated classes, it is assumed that a definition of criticality on that link is available as a function $f(t, c)$ of $t$ and $c$. Various suitable definitions of the criticality are discussed below.

In step 300, the management node determines an amount of traffic associated with each traffic class flowing over an $i$th link of the network (where i is an integer). This step may correspond partially to step 210 described above, in which the management node obtains an indication of the traffic usage over a link of the transport network in each of a plurality of traffic classes. For example, the amount of data may be reported to the management node by nodes of the telecommunication network, either directly or indirectly via one or more intermediate nodes.

Thus in step 300, the management node obtains the amount of traffic for each traffic class flowing on the $i$th link. Note that the amount of traffic for a particular traffic class may be a sum of the traffic belonging to the traffic class from all paths through the network which utilize that link.

In step 302, the management node determines, for each traffic class, the traffic class link capacity of the $i$th link. The traffic class link capacity accounts for the fact that the full capacity c of the link is unlikely to be available to all traffic classes, as traffic belonging to a high-priority traffic class may be scheduled for transmission over the link prior to, or in preference to, traffic belonging to a low-priority traffic class. In this instance, depending on the scheduling algorithm which is employed, the effective link capacity for traffic belonging to the low-priority traffic class will be reduced by that portion of the link capacity which is allocated to traffic belonging to the high-priority traffic class. Conversely, the traffic class link capacity for traffic belonging to the high-priority traffic class may be relatively less affected (or unaffected) by the traffic belonging to the low-priority traffic class. Thus the traffic class link capacity for a particular traffic class varies as a function of a difference between the link capacity of the $i$th link and capacity allocated to other traffic classes on the $i$th link according to a scheduling algorithm.

Various scheduling algorithms will be known to those skilled in the art. Most scheduling algorithms utilize priority values associated with each traffic class to schedule traffic for transmission over a link. Two particularly common scheduling algorithms, strict priority (SP) and weighted fair queuing (WFQ), are discussed in detail below. The skilled person would be able to adapt these embodiments straightforwardly so as to apply the concepts described herein to alternative scheduling algorithms. Combinations of multiple scheduling algorithms are also discussed.

In SP scheduling, the traffic classes are strictly ordered according to their priority values. Traffic belonging to a traffic class with higher priority pre-empts (i.e., is scheduled for transmission in preference to) traffic belonging to lower-priority traffic classes.

Here we assume that there are N traffic classes, ordered from lowest priority to highest priority such that, if i>j, class i has higher priority than class $j$.

Then, if each class j sends traffic $t_j$ on a link with total link capacity $c$, class $k$ on that link can count on a traffic class link capacity equal to the total link capacity minus the capacity used by all the classes with higher priority:

$$c_k = c - \sum_{j=k+1}^{j=N-1} t_j$$

In some embodiments, rate limiters (shapers) may be employed to limit the traffic of each class $j$ to $r_j$ so as to prevent lower-priority traffic classes from becoming starved of capacity. In this case, the traffic class link capacity for class $k$ becomes:

$$c_k = min\left( c - \sum_{j=k+1}^{j=N-1} min(t_j, r_j), r_k \right)$$

That is, the traffic class link capacity is limited to a maximum value $r_k$.

In WFQ scheduling, each class is guaranteed a percentage of the available capacity, according to administrative class weights.

If class $k$ is assigned a weight $w_k$, it is allocated at least a bandwidth of $w_k \cdot c$ on a link of capacity $c$.

Then, if each class $j$ sends traffic $t_j$, class $k$ on that link can count on a virtual capacity equal to whichever is higher of

- the link capacity minus the capacity used by all the other classes, and
- its fair share of the total capacity of the link $w_k \cdot c$

$$c_k = max\left( c - \sum_{j \neq k} t_j \, , \, w_k \cdot c \right)$$

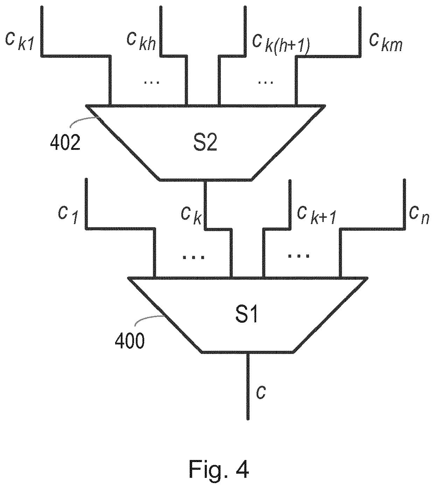

Those skilled in the art will appreciate that multiple, potentially different scheduling algorithms may be combined in a single overall scheduling process. For example, **Figure 4** shows a hierarchical scheduling arrangement in which multiple levels of schedulers are cascaded: the combined output of a first scheduler 400 (S1) is fed to a second scheduler 402 (S2) for further disaggregation. In the illustration, S1 schedules **n** classes and S2 further splits class **k** into **m** subclasses. Any of the resulting classes and subclasses can be arbitrarily split further with another scheduler.

The two schedulers are independent and may implement any algorithm. For example, S1 may implement strict priority, while S2 may implement weighted fair queuing. In such an example, traffic classes $c_{k+1}$ to $c_n$ have higher priority than all other classes. Traffic classes $c_1$ to $c_{k-1}$ have lower priority. Traffic classes $c_{k1}$ to $c_{km}$ have a priority between $c_{k-1}$ and $c_{k+1}$ each receive a configurable fair share according to their respective weights.

Thus the output of step 302 is a set of respective traffic class link capacities (or effective capacities) for each traffic class flowing over the $i$th link.

In step 304, the management node determines, for each traffic class, the traffic class link criticality on the $i$th link. As noted above, the criticality of a link varies as a function of the usage of that link, where the usage is defined as the ratio of the amount of traffic flowing over the link to the capacity of the link. In step 304, the traffic class link usage for a particular traffic class is defined as the ratio of the amount of traffic for the particular traffic class to the traffic class link capacity for that particular traffic class (i.e., as determined in step 302). The criticality for that traffic class (termed herein, "traffic class link criticality") varies as a function of the traffic class link usage.

In one embodiment, the traffic class link criticality is equal to the traffic class link usage. However, as noted above, criticality functions according to some embodiments of the disclosure may take account of the intuitive principle that a link whose usage is below 1 is not significantly "critical". For example, a link with a usage of 0.5 may have a criticality value which is less than 0.5. Thus, in these embodiments, the traffic class link criticality may differ from the traffic class link usage.

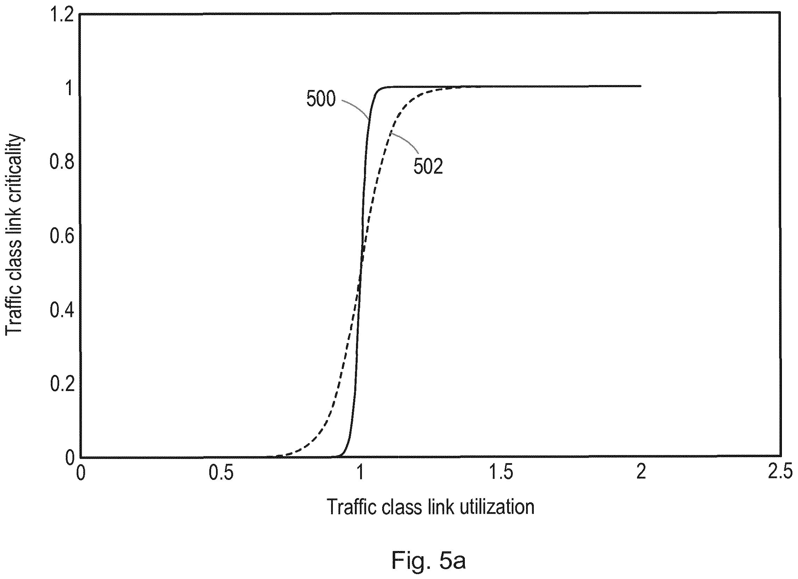

**Figure 5a** shows the variation of traffic class link criticality with traffic class link utilization according to an embodiment of the disclosure. Two functions are shown: a first function 500 and a second function 502.

Generally, determined criticality values increase as the utilization of the link (i.e. traffic load increases). For some ranges of the utilization the criticality may have a constant or substantially constant value (e.g. at low utilizations, e.g. below 50%). The determined criticality values, based on functions such as functions 500, 502, provide for effective weighting of traffic routes so that traffic flow through the network is carried out effectively.

For both functions, as described above, it can be seen that the criticality varies, monotonically and with a non-constant gradient, between a minimum value and a maximum value as the link utilization increases. At low values of the utilization, the criticality varies with the utilization at a relatively low (or zero) gradient. In the illustrated embodiment, the criticality tends (asymptotically) towards its minimum value as the utilization approaches zero. Similarly, at high values of the utilization (above 1), the criticality also varies with the utilization at a relatively low (or zero) gradient. In the illustrated embodiment, the criticality tends (asymptotically) towards its maximum value as the utilization approaches infinity. In between those two regions, the criticality varies with the utilization at a relatively high gradient. In particular, the criticality increases with a relatively high gradient between utilization of around 0.8 (or 80%) and 1 (or 100%). This reflects the fact that the link rapidly moves from a situation in which operation of the link is normal (e.g., few or no packets experience additional delay), even at relatively high utilization, to one in which operation of the link is compromised (e.g., several or all packets experience additional delay) as the utilization approaches 1.

The above description can be mathematically quantified with an S-shaped or sigmoid function. The sigmoid function as a shape is well studied and those skilled in the art will appreciate that there are several functions with a sigmoid shape. The logistic function is one of the most common, defined as follows:

$$s = \frac{1}{1 + exp(b \cdot (a - v))}$$

In this example, the criticality function s has two configurable parameters: the slope b and the intercept **a**. **v** is the link utilization, defined above. The slope determines how steep the curve is in proximity of the intercept, and the intercept determines where the gradient of the function is highest (e.g., the value of the utilization at which the criticality is equal to 0.5 in this specific example). The presence of one or more configurable parameters in the criticality function means that the determined criticality value can be tuned or optimized for a particular network or network type. Thus, for example, in an initial configuration phase, one or more configurable parameters can be determined which provide for the determined criticality values to accurately reflect the impact of traffic on the operation of the network. The functions 500 and 502 illustrated in Figure 5a are both logistic functions. The function 500 has a slope of 70 and an intercept of 1. The function 502 has a slope of 18 and an intercept of 1.

Those skilled in the art will appreciate that the criticality may not be defined as a logistic function. For example,

$$S = \frac{v}{\sqrt{(1+v^2)}}$$

alternative sigmoid functions may include    .

The criticality may also not be defined as a conventional S-shaped or sigmoid function.

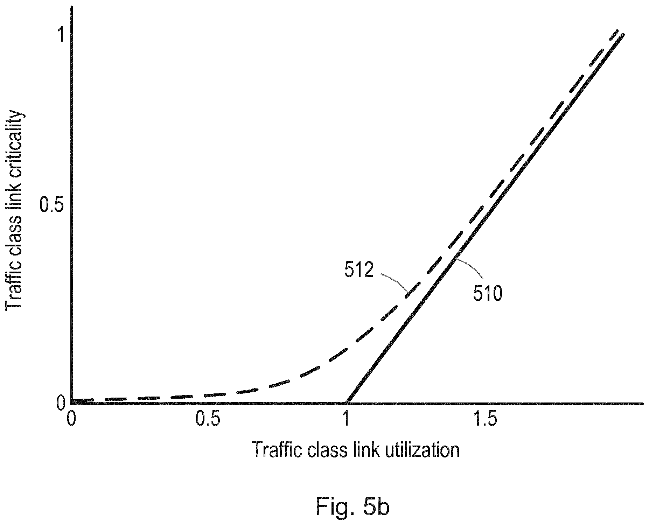

**Figure 5b** shows the variation of traffic class link criticality with traffic class link utilization according to a further embodiment of the disclosure. Two functions are shown: a first function 510 and a second function 512. According to this further embodiment, the criticality function is defined as a rectifier function, which again varies from a lower or minimum value at low values of the traffic class link utilization, but which continues to increase at higher values of the traffic class link utilization. Function 510 comprises a constant value at low values of the traffic class link utilization (in the illustrated embodiment, at values of the traffic class link utilization which are less than one), and increases at a constant value at high values of the traffic class link utilization (in the illustrated embodiment, at values of the traffic class link utilization which are greater than one). Function 512 approximates function 510, but varies smoothly.

The example functions 500, 502, 512 given above are smoothly varying and differentiable. The criticality function may be defined differently, for example as a series of straight line curves for different regions of the utilization (e.g., as shown in function 510).

In another example, values of the criticality may be defined in a look-up table, based on corresponding values of the utilization. The values of the criticality may be defined based on the utilization so as to approximate the functions described above with respect to Figures 5a and 5b.

The functions may comprise one or more parameters which are configurable by the network operators, e.g., to achieve a desired outcome or performance. For example, where the criticality varies as a logistic function of the utilization, one or more of the slope and the intercept may be configured by the network operator as desired. The intercept may be defined relatively low (e.g. a guard margin below 1) such that the traffic flowing in the link preferably never reaches capacity, or that the usage of queues and buffers is reduced. Alternatively, the intercept may be defined relatively high (e.g. above 1), if the network operator wishes to accommodate large amounts of traffic. Similarly, the slope can be made steeper (i.e. a higher gradient on a graph of criticality value on the vertical axis and link utilization on the horizontal axis) if the type of traffic transmitted over the network is particularly sensitive to latency.

In Figures 5a and 5b, the minimum values of the criticality are equal to or approach zero. According to an embodiment of the disclosure, however, the minimum value of the criticality (e.g., as the utilization approaches or is equal to zero) is non-zero. It will be understood from the discussion below (particularly in relation to the discussion of traffic allocation in Figure 6) that a link which has zero criticality is unlikely to effect the allocation of weights to paths through the network. A non-zero criticality, even at low values of utilization, allows the weights to be optimized even when relatively little traffic is flowing in the network. For example, an offset may be applied to the criticality at low values of the utilization, or the function may be defined such that the criticality is equal to or tends towards a non-zero value as the utilization approaches zero.

It will further be understood that the criticality function may vary between different traffic classes. For example, the criticality function for a first traffic class may utilize different parameters (e.g., a different slope or intercept) than the criticality function for a second traffic class.

Thus the output of step 304 is a set of respective traffic class link criticalities for each traffic class flowing over the $i$th link.

In step 306, the management node determines an overall traffic class link criticality for one or more traffic classes flowing on the $i$th link. The overall traffic class link criticality for a particular traffic class varies as a function of a sum of the traffic class link criticalities determined in step 304, taken over the particular traffic class and all traffic classes whose traffic class link capacities are affected by the particular traffic class according to their respective priority values and the scheduling algorithm employed for transmission over the $i$th link. For example, where strict priority scheduling is employed, the overall traffic class link criticality for a traffic class i varies as a function of a sum of the traffic class link criticalities for traffic class i and all traffic classes with lower priority. Where weighted fair queuing is employed, the sum is taken over all traffic classes as each traffic class affects the traffic class link capacity for all other traffic classes over the link.

Thus, where strict priority scheduling is employed, separate overall traffic class link criticalities may be determined for each traffic class (as these will in general be different); where weighted fair queuing is employed, the overall traffic class link criticality for each traffic class will be the same. In the latter case, therefore, the overall traffic class link criticality may be determined only once.

The overall traffic class link criticality may be determined as a function on a weighted sum of the traffic class link criticalities. In such an embodiment, each traffic class link criticality may be multiplied by a respective coefficient $p_i$ prior to summing with the other traffic class link criticalities.

By setting the coefficient of a class **k** high relative to the coefficients of the classes affected by class **k** (e.g., with lower priorities than class **k**), class **k** becomes less sensitive to these affected classes, making its traffic more stable, but less "cooperative" towards them (i.e., less likely to move to a different path if one is available). Conversely, by setting the coefficient of class **k** high relative to the coefficients of the classes affecting it (e.g., with higher priorities than class **k**), class **k** becomes more influential towards these affecting classes, making their traffic less stable, but more "cooperative" towards class **k**.

Thus the coefficients may be set by network operators to achieve certain desired results with respect to particular traffic classes. For example, it may be desired for particular traffic classes to be associated with paths through the network which rarely change. In this case, those particular traffic classes may be assigned relatively high coefficients.

Alternatively, all of the coefficients may be set equal to the same value (e.g., 1).

In one embodiment, the overall traffic class link criticality may be normalized, as follows:

$$\frac{\sum_i p_i s_i}{\sum_i p_i}$$

where $s_i$ is the traffic class link criticality for the traffic class $i$. As noted above, the sum is taken over the particular traffic class **k** and all traffic classes affected by **k**. It will be noted by those skilled in the art that, where the coefficients $p_i$ are set to the same value, the overall traffic class link criticality defined above corresponds to a mean average of the traffic class link criticalities in the sum.

Thus the output of step 306 is at least one overall traffic class link criticality (particularly if WFQ is employed as the scheduling algorithm), and potentially respective overall traffic class link criticalities for each traffic class flowing over the $i$th link.

In step 308, the management node determines whether additional links of the telecommunication network remain to be analyzed. Here it will be understood that embodiments of the disclosure may be used to determine the criticality of a single link (e.g., to determine whether that link is subject to particularly high levels of stress and may be causing a bottleneck in the network), or multiple links of the network (e.g., to enable movement of traffic from more-critical links to less-critical links, to identify those links which are overloaded relative to other links, etc). Where multiple links are analyzed, the analysis may be performed over the entire network or only part of it.

Thus if it is determined that more links remain to be analyzed, the method proceeds to step 310, in which a new value of i is chosen (e.g., $i = i + 1$), and then returns to step 300. Thus steps 300, 302, 304 and 306 are repeated for the new link.

If it is determined that no more links remain to be analyzed, the method proceeds to step 312 in which the management node configures the network based on the overall traffic class link criticality (or criticalities). Those skilled in the art will appreciate that there are multiple uses of the overall traffic class link criticalities determined in step 306. Two particular use cases set out herein are the allocation of traffic to paths through the network and the identification of bottleneck links which should be scheduled for maintenance or upgrade.

For example, **Figure 6** is a flowchart of a method for allocating traffic to the network based on the overall traffic link criticalities (e.g., as determined in step 306). The method may be performed by a management node for the network, such as the management node 206 described above.

As noted above, the traffic flowing on the network may be defined by a plurality of demands for connectivity over the network. Each demand for connectivity may relate to connectivity between nodes of a client network or between attachment points of a transport network. Each connectivity demand may comprise or be associated with identities of a first node (e.g. a source or ingress node) and a second node (e.g., a destination or egress node), with traffic to be routed between those nodes via the transport network 204. Each connectivity demand may further be associated with one or more constraints to be satisfied by the routing through the telecommunication network (e.g., one or more of the constraints described above), an indication of traffic volume of the connectivity, and a traffic class.

The traffic for each demand is distributed via a plurality of paths (each path of the plurality of paths satisfying the constraint for that demand) between the first and second nodes according to weights allocated to each path. The weights may be determined initially by any suitable mechanism or algorithm. In one embodiment, the weights may be equal such that traffic for each demand is distributed evenly among the plurality of paths. In alternative embodiments, the weights may be determined so as to approximate more closely an optimal solution. For example, the weights may be determined using the techniques described in PCT application no PCT/EP2017/084207. However, various methods for traffic allocation are known in the art. Each path may comprise one or more links.

In step 600, the management node determines, for a particular demand for connectivity (and thus a particular traffic class), an overall traffic class link criticality for each link forming part of a path. The process for determining the overall traffic class link criticalities is described above with respect to Figure 3 (see in particular steps 300, 302, 304 and 306). As noted above, traffic for each demand is routed via a plurality of paths, and each path may comprise one or more links. Thus an overall traffic class link criticality is determined for each link forming part of these paths.

This process is repeated for at least one further demand, and potentially all other demands, such that overall traffic class link criticalities are determined for each link, and for each traffic class.

In step 602, the management node determines an overall traffic class criticality for each path of the plurality of paths for the particular demand for connectivity (termed herein the overall traffic class path criticality). The overall traffic class path criticality for a path varies as a function of a sum of the overall traffic class link criticalities taken over all links forming the path. For example, in one embodiment, the overall traffic class path criticality may be a mean average of the overall traffic class link criticalities forming the path.

Again, this process is repeated for at least one further demand, and potentially all other demands, such overall traffic class path criticalities are determined for each path for multiple demands.

In step 604, the management node determines the difference in overall traffic class path criticalities between the most-critical path and the least-critical path of the plurality of paths for each of the demands subject to analysis. For example, where two demands are subject to analysis, there are two respective plurality of paths. For each demand (and thus each plurality of paths), the management node determines the difference between the most-critical path (i.e. the path associated with the greatest overall traffic class path criticality determined in step 602) and the least-critical path (i.e. the path associated with the smallest overall traffic class path criticality determined in step 602). The management node then determines the demand associated with the greatest difference.

In step 606, the management node adjusts the weights assigned to the paths of the demand identified in step 604, so as to reduce the overall traffic class path criticality of the most-critical path and to increase the overall traffic class path criticality of the least-critical path. For example, the weight associated with the most-critical path may be reduced by a certain amount, and the weight associated with the least-critical path increased by the same amount.

In this way, the most critical traffic class is identified and steps taken to reduce the criticality of that traffic class. Further, the process of identifying the criticality of the traffic classes takes into account their relative importance or priority (through the definition of the criticality described above with respect to Figure 3), to enable a fair comparison between different traffic classes.

Two examples of this process are shown in Figures 7a and 7b.

**Figure 7a** shows a first example in which two demands, **d0** and **d1**, with classes 0 and 1 respectively, are issued between the same endpoints.

Two alternative paths satisfy both demands. The two paths cross links L1 and L2 with equal capacity c = 1Gbps, with the two links representing the main characteristics of the two paths. The total volume of traffic for d0 is 1 Gbps; the total volume of traffic for d1 is 0.6 Gbps.

We set $p_i = 1$ for all the classes (i.e. the coefficients are equal and thus do not affect the distribution of traffic). The criticality function *f* is applied to the traffic usage (traffic divided by capacity) and is S-shaped such that it stays close to 0 below 1, raises sharply close to 1, reaches 0.5 exactly at 1 and goes towards 1 above 1. See Figure 5a, for example. Strict priority scheduling is used for transmissions over both links.

Initially, on L1

- $t_0$ = 1Gbps, $t_1$ = 300Mbps
- $c_0$ = 700Mbps, $c_1$ = 1Gbps
- $s_0 = f(t_0 / c_0) = f(1/0.7) = s(1.42) = 0.99$
- $s_1 = f(t_1 / c_1) = f(0.3/1) = s(0.3) = 0.01$
- $TCLC_{overall, 0} = 0.99$
- $TCLC_{overall, 1} = (0.99 + 0.01) / (1 + 1) = 0.5$

where $t_0$ and $t_1$ are the traffic belonging to classes 0 and 1 on L1, respectively; $c_0$ and $c_1$ are the traffic class link capacity for traffic belonging to classes 0 and 1 on L1, respectively; $s_0$ and $s_1$ are the traffic class link criticality for traffic belonging to classes 0 and 1 on L1, respectively; and $TCLC_{overall, 1}$ is the overall traffic class link criticality for d1 on L1, and $TCLC_{overall, 0}$ is the overall traffic class link criticality for d0 on L1.

On L2

- $t_0$ = 0bps, $t_1$ = 300Mbps
- $c_0$ = 700Mbps, $c_1$ = 1Gbps

$$s_0 = s(t_0 / c_0) = s(0/0.7) = s(0) = 0.005$$

$$s_1 = s(t_1 / c_1) = s(0.3/1) = s(0.3) = 0.01$$

$$TCLC_{overall,\ 0} = 0.005$$

$$TCLC_{overall,\ 1} = (0.005 + 0.01) / (1 + 1) = 0.0075$$

Thus the traffic for d1 is initially split between L1 and L2, whereas the traffic for d0 is loaded entirely on to L1. The overall traffic class link criticality for d0 on L1 is therefore very high.

To improve the network status (overall criticality) traffic may be moved among alternative paths on the demand with the greatest difference between overall traffic class link criticalities:

$$TCLC_{overall,\ 0}\ (L1) - TCLC_{overall,\ 0}\ (L2) = 0.99 - 0.005 = 0.985$$

$$TCLC_{overall,\ 1}\ (L1) - TCLC_{overall,\ 1}\ (L2) = 0.5 - 0.0075 = 0.4925$$

Both demands have space to move traffic to L2. However, the class at lower priority (i.e. d0) has the greater difference in overall traffic class link criticalities, and therefore traffic is moved from L1 to L2 for d0.

**Figure 7b** shows a second example in which two demands, **d0** and **d1**, with classes 0 and 1 respectively, are issued between the different endpoints.

Two alternative paths are possible per demand, crossing links L1, L2 and L3 (each having capacity c = 1Gbps). Both demands have L2 in common, so that traffic for d0 can be allocated between L1 and L2, whereas traffic for d1 can be allocated between L2 and L3. The coefficients, criticality functions and notation are the same as for the first example given above with respect to Figure 7a. Strict priority scheduling is used for transmissions over all three links.

Initially, on L1

$$t_0 = 1Gbps,\ c_0 = 1Gbps$$

$$s_0 = TCLC_{overall,\ 0} = s(t_0 / c_0) = s(1/1) = s(1) = 0.5$$

On L2

$$t_0 = 800Mbps,\ t_1 = 300Mbps$$

$$c_0 = 700Mbps,\ c_1 = 1Gbps$$

$$s_0 = TCLC_{overall,\ 0} = s(t_0 / c_0) = s(0.8/0.7) = s(1.14) = 0.7$$

$$s_1 = s(t_1 / c_1) = s(0.3/1) = s(0.3) = 0.01$$

$$TCLC_{overall,\ 1} = (0.7 + 0.01) / (1 + 1) = 0.355$$

On L3

$$t_0 = 0bps, t_1 = 300Mbps$$

$$c_0 = 700Mbps, c_1 = 1Gbps$$

$$s_0 = TCLC_{overall, 0} = s(t_0 / c_0) = s(0/0.7) = s(0) = 0.005$$

$$s_1 = s(t_1 / c_1) = s(0.3/1) = s(0.3) = 0.01$$

$$TCLC_{overall, 1} = (0.005 + 0.01) / (1 + 1) = 0.0075$$

Here it will be noted that the calculations for link L3 contain terms for traffic belonging to class 0. This is to account for the fact that link L3 may host other demands for traffic in class 0, and that traffic in class 1 (e.g., belonging to demand d1) will affect the capacity for traffic in class 0. In other words, it is recorded that allocating class 1 traffic to link L3 reduces the availability of resources for traffic belonging to class 0. This is in contrast to the situation on link L1, where the allocation of traffic belonging to class 0 does not affect traffic in class 0 and thus calculations are not performed for traffic in class 1.

To improve the network status (overall criticality) traffic may again be moved among alternative paths on the demand with the greatest difference between overall traffic class link criticalities:

$$TCLC_{overall, 0} (L2) - TCLC_{overall, 0} (L1) = 0.7 - 0.5 = 0.2$$

$$TCLC_{overall, 1} (L2) - TCLC_{overall, 1} (L3) = 0.355 - 0.0075 = 0.3475$$

Thus in this example, by including the criticality of class 0 in the TNC formula for class 1, the traffic of class 1 is selected and moved from L2 to L3. Intuitively, this is because the alternative links (L1 or L2) for traffic belonging to class 0 have substantially similar overall traffic class link criticalities.

Thus embodiments of the disclosure describe methods and apparatus for allocating traffic to paths through a network.

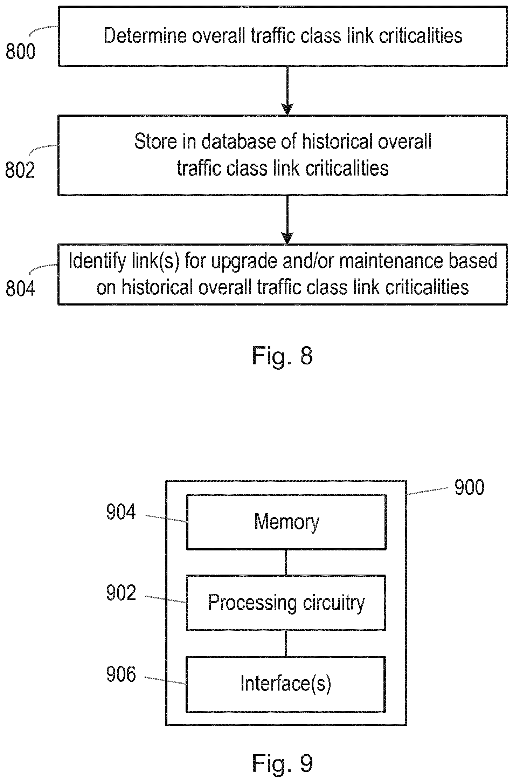

As noted above, alternative embodiments provide for the identification of links forming bottlenecks in the network. **Figure 8** is a flowchart describing such a method. The method may be performed by the management node 206 described above.

In step 800, the management node determines one or more overall traffic class link criticalities for the links in the network. The process for determining the overall traffic class link criticalities is described above with respect to Figure 3 (see in particular steps 300, 302, 304 and 306).

In step 802, the management node stores the overall traffic class link criticalities in a database comprising historical overall traffic class link criticalities for the links of the network. The database may comprise past values of the overall traffic class link criticalities for each link of the network, such that the overall traffic class link criticalities are monitored over time. For example, each link may be associated with time-series data which tracks the overall traffic class link criticalities on that link.

In step 804, the management node identifies one or more links which require maintenance or upgrade, based on the historical overall traffic class link criticalities. For example, the management node may employ one or more statistical techniques to identify those links which require maintenance or upgrade. At a simple level, a link may be identified for upgrade or maintenance if it has overall traffic class link criticalities which are consistently higher than other links. Average overall traffic class link criticalities may be used to identify such links, or alternatively the peak values of overall traffic class link criticalities used. In a more sophisticated example, prediction models may be trained to identify those links which require maintenance or upgrade based on the historical overall traffic class link criticalities. The prediction models may be trained using one or more machine-learning algorithms, such as neural networks.

Thus embodiments of the disclosure further describe methods and apparatus for monitoring links of the network for particularly high or unusual loading, permitting those links to be scheduled for maintenance or upgrade.

**Figure 9** is a schematic diagram of a network management node 900 according to embodiments of the claimed invention. The network management node 900 may be operable as the management node 206 shown in Figure 2, for example. The network management node 900 may be operable to perform the methods according to any one of Figures 3, 6 and 8.

The network management node 900 comprises processing circuitry 902 and a non-transitory machine-readable medium (such as memory) 904. The network management node 900 is for configuring a telecommunication network comprising a plurality of nodes. Pairs of nodes are connected by respective links, with each link having a respective link capacity. Traffic directed over the telecommunication network is associated with one of a plurality of traffic classes, with each traffic class having a respective priority value.

According to the claimed invention machine-readable medium 904 stores instructions which, when executed by the processing circuitry 902, cause the network management node 900 to: a) determine an amount of traffic associated with each traffic class flowing on a first link of the telecommunication network; b) for each traffic class, determine a traffic class link capacity, the traffic class link capacity for a particular traffic class varying as a function of a difference between the link capacity of the first link and capacity allocated to other traffic classes on the first link according to a scheduling algorithm based on the priority value of the particular traffic class and the priority values of the other traffic classes; c) for each traffic class, determine a traffic class link criticality of the first link as a function of the respective traffic class link capacity and an amount of traffic associated with the traffic class flowing on the first link; d) determine one or more overall traffic class link criticalities for the first link, the overall traffic class link criticality for a particular traffic class for the first link varying as a function of a sum of the traffic class link criticalities for one or more traffic classes for the first link, the one or more traffic classes including at least the particular traffic class and each traffic class of the plurality of traffic classes for which the traffic class link capacity varies by virtue of the scheduling algorithm and the priority value associated with the particular traffic class; e) repeat steps a) to d) for one or more second links of the telecommunication network; and f) configure the telecommunication network based on the overall traffic class link criticalities for the first link and the one or more second links.

The management network node 900 may further comprise one or more interfaces 906, providing interfaces for the transmission and/or reception of signals via any suitable modality. For example, the interfaces 906 may comprise circuitry suitable for the transmission and/or reception of electrical, wireless or optical signals, and thus may comprise circuitry such as optical transmitters and receivers, wireless or radio transceiver circuitry and/or antennas, and digital processing circuitry for the transmission of electrical signals.

The processing circuitry 902, machine-readable medium 904 and interfaces 906 may be coupled to each other in any suitable manner. For example, although Figure 9 shows the components coupled together in series, it will be understood by those skilled in the art that the components may be coupled together in an alternative manner, such as via a bus.

The network management node 900 may alternatively be defined in terms of hardware and/or software modules configured to perform the steps of the methods described herein.

As used herein, the term 'module' shall be used to at least refer to a functional unit or block of an apparatus or device. The functional unit or block may be implemented at least partly by dedicated hardware components such as custom defined circuitry and/or at least partly be implemented by one or more software processors or appropriate code running on a suitable general purpose processor or the like. In one embodiment, the modules are defined purely in hardware. In another embodiment, the modules are defined purely by software. A module may itself comprise other modules or functional units.

This software code may be stored in the device as firmware on some non-volatile memory e.g. EEPROM (to preserve program data when the battery becomes discharged or is removed for replacement).

Embodiments of the present disclosure thus provide apparatus, computer program products and methods for configuring a telecommunications network.

It should be understood-especially by those having ordinary skill in the art with the benefit of this disclosure-that that the various operations described herein, particularly in connection with the figures, may be implemented by other circuitry or other hardware components.

**Claims**

1. A method for configuring a telecommunication network (106, 108, 204), the telecommunication network comprising a plurality of nodes, with pairs of nodes being connected by respective links, each link having a respective link capacity, wherein traffic directed over the telecommunication network is associated with one of a plurality of traffic classes, each traffic class having a respective priority value, the method comprising:

   a) determining (300) an amount of traffic associated with each traffic class flowing on a first link of the telecommunication network;

b) for each traffic class, determining (302) a traffic class link capacity, the traffic class link capacity for a particular traffic class varying as a function of a difference between the link capacity of the first link and capacity allocated to other traffic classes on the first link according to a scheduling algorithm based on the priority value of the particular traffic class and the priority values of the other traffic classes;

c) for each traffic class, determining (304) a traffic class link criticality of the first link as a function of the respective traffic class link capacity and an amount of traffic associated with the traffic class flowing on the first link;

d) determining (306, 600, 800) one or more overall traffic class link criticalities for the first link, the overall traffic class link criticality for a particular traffic class for the first link varying as a function of a sum of the traffic class link criticalities for one or more traffic classes for the first link, the one or more traffic classes including at least the particular traffic class and each traffic class of the plurality of traffic classes for which the traffic class link capacity varies by virtue of the scheduling algorithm and the priority value associated with the particular traffic class;

e) repeating steps a) to d) for one or more second links of the telecommunication network; and

f) configuring (312) the telecommunication network based on the overall traffic class link criticalities for the first link and the one or more second links.

2. The method according to claim 1, wherein configuring the telecommunication network comprises (606) allocating traffic to paths on the telecommunication network based on the overall traffic class link criticalities for the first link and the one or more second links.

3. The method according to claim 2, wherein a demand for connectivity between a first node and a second node is allocated to the telecommunication network, with traffic for the demand being directed via at least first and second paths between the first and second nodes, the first path comprising the first link and the second path comprising a particular second link, and wherein configuring the telecommunication network comprises transferring (606) traffic between the first and second paths in accordance with the overall traffic class link criticalities for the first link and the particular second link.

4. The method according to claim 3, further comprising determining a difference between the overall traffic class link criticalities for the first link and the overall traffic class link criticalities for the particular second link, and wherein transferring traffic between the first and second paths comprises transferring traffic associated with a traffic class for which the difference in overall class link criticality is the greatest.

5. The method according to claim 3 or 4, wherein traffic for the demand is directed via at least first and second paths in accordance with respective weights assigned to each path, and transferring traffic comprises adapting the respective weights.

6. The method according to any one of claims 3 to 5, further comprising determining (602) one or more overall traffic class path criticalities for the first path by summing the overall traffic class link criticalities for links belonging to the first path, and determining one or more overall traffic class path criticalities for the second path by summing the overall traffic class link criticalities for links belonging to the second path, and wherein allocating traffic to paths on the telecommunication network based on the overall traffic class link criticalities for the first link and the one or more second links comprises allocating traffic to paths on the telecommunication network based on the overall traffic class path criticalities for the first and second paths.

7. The method according to any one of the preceding claims, wherein configuring the telecommunication network comprises scheduling (804) a link for maintenance or upgrade based on the one or more overall traffic class criticalities.

8. The method according to claim 7, further comprising storing (802) the overall traffic class link criticalities for the first link and the one or more second links in a database comprising historical overall traffic class link criticalities for links of the telecommunication network, and scheduling a link for maintenance or upgrade based on the historical overall traffic class link criticalities.

9. The method according to any one of the preceding claims, wherein the scheduling algorithm comprises a strict priority algorithm, in which all traffic associated with a traffic class having a first priority value is scheduled for transmission prior to all traffic associated with traffic classes having priority values lower than the first priority value.

10. The method according to any one of the preceding claims, wherein the scheduling algorithm comprises a weighted fair queuing algorithm, in which traffic associated with each traffic class is allocated a share of the link capacity based on the respective priority values associate with each traffic class.

11. The method according to any one of the preceding claims, wherein the scheduling algorithm comprises a rate-limiting function, configured to limit a share of the link capacity for each traffic class to a determined maximum value.

12. The method according to any one of the preceding claims, wherein the traffic class link criticality for a particular traffic class of the first link varies as a function of a traffic class link utilization for the particular traffic class, the traffic class link utilization being a ratio between the amount of traffic associated with the particular traffic class flowing on the first link and the traffic class link capacity for the particular traffic class for the first link.

13. The method according to claim 12, wherein the traffic class link criticality for a particular traffic class of the first link varies as a function of a traffic class link utilization for the particular traffic class at a non-constant gradient between a first value at a first value of the utilization and a second value at a second value of the utilization, the first value of the traffic class link criticality being less than the second value of the traffic class link criticality and the first value of the traffic class link utilization being less than the second value of the traffic class link utilization.

14. A network management node (900) for configuring a telecommunication network, the telecommunication network comprising a plurality of nodes, with pairs of nodes being connected by respective links, each link having a respective link capacity, wherein traffic directed over the telecommunication network is associated with one of a plurality of traffic classes, each traffic class having a respective priority value, the network management node comprising processing circuitry (902) and a non-transitory machine-readable medium (904) storing instructions which, when executed by processing circuitry, cause the network management node to:

   a) determine an amount of traffic associated with each traffic class flowing on a first link of the telecommunication network;
   b) for each traffic class, determine a traffic class link capacity, the traffic class link capacity for a particular traffic class varying as a function of a difference between the link capacity of the first link and capacity allocated to other traffic classes on the first link according to a scheduling algorithm based on the priority value of the particular traffic class and the priority values of the other traffic classes;
   c) for each traffic class, determine a traffic class link criticality of the first link as a function of the respective traffic class link capacity and an amount of traffic associated with the traffic class flowing on the first link;
   d) determine one or more overall traffic class link criticalities for the first link, the overall traffic class link criticality for a particular traffic class for the first link varying as a function of a sum of the traffic class link criticalities for one or more traffic classes for the first link, the one or more traffic classes including at least the particular traffic class and each traffic class of the plurality of traffic classes for which the traffic class link capacity varies by virtue of the scheduling algorithm and the priority value associated with the particular traffic class;
   e) repeat steps a) to d) for one or more second links of the telecommunication network; and
   f) configure the telecommunication network based on the overall traffic class link criticalities for the first link and the one or more second links.

15. A computer program product comprising a non-transitory machine-readable medium storing instructions which, when executed by processing circuitry of a network management node, the network management node being coupled to a telecommunications network, the telecommunication network comprising a plurality of nodes, with pairs of nodes being connected by respective links, each link having a respective link capacity, wherein traffic directed over the telecommunication network is associated with one of a plurality of traffic classes, each traffic class having a respective priority value, cause the network management node to:

   a) determine an amount of traffic associated with each traffic class flowing on a first link of the telecommunication network;
   b) for each traffic class, determine a traffic class link capacity, the traffic class link capacity for a particular traffic class varying as a function of a difference between the link capacity of the first link and capacity allocated to other traffic classes on the first link according to a scheduling algorithm based on the priority value of the particular traffic class and the priority values of the other traffic classes;
   c) for each traffic class, determine a traffic class link criticality of the first link as a function of the respective traffic class link capacity and an amount of traffic associated with the traffic class flowing on the first link;
   d) determine one or more overall traffic class link criticalities for the first link, the overall traffic class link criticality for a particular traffic class for the first link varying as a function of a sum of the traffic class link criticalities for one or more traffic classes for the first link, the one or more traffic classes including at least the particular traffic class and each traffic class of the plurality of traffic classes for which the traffic class link capacity varies by virtue of the scheduling algorithm and the priority value associated with the particular traffic class; and

e) repeat steps a) to d) for one or more second links of the telecommunication network; and

f) configure the telecommunication network based on the overall traffic class link criticalities for the first link and the one or more second links.

## Patentansprüche

1. Verfahren zum Konfigurieren eines Telekommunikationsnetzes (106, 108, 204), das Telekommunikationsnetz umfassend eine Vielzahl von Knoten, wobei Paare von Knoten durch jeweilige Links verbunden sind, wobei jeder Link eine jeweilige Linkkapazität aufweist, wobei der über das Telekommunikationsnetz geleitete Verkehr mit einer von einer Vielzahl von Verkehrsklassen assoziiert ist, wobei jede Verkehrsklasse einen jeweiligen Prioritätswert aufweist, das Verfahren umfassend:

   a) Bestimmen (300) einer Verkehrsmenge, die mit jeder Verkehrsklasse assoziiert ist, die auf einem ersten Link des Telekommunikationsnetzes fließt;

   b) für jede Verkehrsklasse, Bestimmen (302) einer Verkehrsklassenlinkkapazität, wobei die Verkehrsklassenlinkkapazität für eine spezielle Verkehrsklasse in Abhängigkeit von einer Differenz zwischen der Linkkapazität des ersten Links und der Kapazität, die anderen Verkehrsklassen auf dem ersten Link zugeordnet ist, gemäß einem Planungsalgorithmus basierend auf dem Prioritätswert der speziellen Verkehrsklasse und den Prioritätswerten der anderen Verkehrsklassen variiert;

   c) für jede Verkehrsklasse, Bestimmen (304) einer Verkehrsklassenlinkkritikalität des ersten Links in Abhängigkeit von der jeweiligen Verkehrsklassenlinkkapazität und einer Verkehrsmenge, die mit der Verkehrsklasse assoziiert ist, die auf dem ersten Link fließt;

   d) Bestimmen (306, 600, 800) einer oder mehrerer Gesamtverkehrsklassenlinkkritikalitäten für den ersten Link, wobei die Gesamtverkehrsklassenlinkkritikalität für eine spezielle Verkehrsklasse für den ersten Link in Abhängigkeit von einer Summe der Verkehrsklassenlinkkritikalitäten für eine oder mehrere Verkehrsklassen für den ersten Link variiert, wobei die eine oder die mehreren Verkehrsklassen mindestens die spezielle Verkehrsklasse und jede Verkehrsklasse der Vielzahl von Verkehrsklassen einschließen, für die die Verkehrsklassenlinkkapazität aufgrund des Planungsalgorithmus und des mit der speziellen Verkehrsklasse assoziierten Prioritätswerts variiert;

   e) Wiederholen der Schritte a) bis d) für einen oder mehrere zweite Links des Telekommunikationsnetzes; und

   f) Konfigurieren (312) des Telekommunikationsnetzes basierend auf den Gesamtverkehrsklassenlinkkritikalitäten für den ersten Link und den einen oder die mehreren zweiten Links.

2. Verfahren nach Anspruch 1, wobei das Konfigurieren des Telekommunikationsnetzes das Zuordnen von Verkehr zu Pfaden auf dem Telekommunikationsnetz basierend auf den Gesamtverkehrsklassenlinkkritikalitäten für den ersten Link und den einen oder die mehreren zweiten Links umfasst (606).

3. Verfahren nach Anspruch 2, wobei ein Bedarf an Konnektivität zwischen einem ersten Knoten und einem zweiten Knoten dem Telekommunikationsnetz zugeordnet wird, wobei Verkehr für den Bedarf über mindestens einen ersten und zweiten Pfad zwischen dem ersten und dem zweiten Knoten geleitet wird, der erste Pfad umfassend den ersten Link und der zweite Pfad umfassend einen speziellen zweiten Link, und wobei das Konfigurieren des Telekommunikationsnetzes das Transferieren (606) von Verkehr zwischen dem ersten und dem zweiten Pfad gemäß den Gesamtverkehrsklassenlinkkritikalitäten für den ersten Link und den speziellen zweiten Link umfasst.

4. Verfahren nach Anspruch 3, ferner umfassend das Bestimmen einer Differenz zwischen den Gesamtverkehrsklassenlinkkritikalitäten für den ersten Link und den Gesamtverkehrsklassenlinkkritikalitäten für den speziellen zweiten Link, und wobei das Transferieren von Verkehr zwischen dem ersten und dem zweiten Pfad das Transferieren von Verkehr umfasst, der mit einer Verkehrsklasse assoziiert ist, für die die Differenz in der Gesamtklassenlinkkritikalität am größten ist.

5. Verfahren nach Anspruch 3 oder 4, wobei Verkehr für den Bedarf über mindestens einen ersten und einen zweiten Pfad gemäß jeweiligen Gewichtungen geleitet wird, die jedem Pfad zugewiesen sind, und das Transferieren von Verkehr das Anpassen der jeweiligen Gewichtungen umfasst.

**6.** Verfahren nach einem der Ansprüche 3 bis 5, ferner umfassend das Bestimmen (602) einer oder mehrerer Gesamtverkehrsklassenpfadkritikalitäten für den ersten Pfad durch ein Summieren der Gesamtverkehrsklassenlinkkritikalitäten für Links, die zu dem ersten Pfad gehören, und Bestimmen einer oder mehrerer Gesamtverkehrsklassenpfadkritikalitäten für den zweiten Pfad durch das Summieren der Gesamtverkehrsklassenlinkkritikalitäten für Links, die zu dem zweiten Pfad gehören, und wobei das Zuordnen von Verkehr zu Pfaden auf dem Telekommunikationsnetz basierend auf den Gesamtverkehrsklassenlinkkritikalitäten für den ersten Link und den einen oder den mehreren zweiten Links das Zuordnen von Verkehr zu Pfaden auf dem Telekommunikationsnetz basierend auf den Gesamtverkehrsklassenpfadkritikalitäten für den ersten und den zweiten Pfad umfasst.

**7.** Verfahren nach einem der vorstehenden Ansprüche, wobei das Konfigurieren des Telekommunikationsnetzes das Planen (804) eines Links für eine Wartung oder zu einem Upgrade basierend auf der einen oder den mehreren Gesamtverkehrsklassenkritikalitäten umfasst.

**8.** Verfahren nach Anspruch 7, ferner umfassend ein Speichern (802) der Gesamtverkehrsklassenlinkkritikalitäten für den ersten Link und den einen oder die mehreren zweiten Links in einer Datenbank, umfassend historische Gesamtverkehrsklassenlinkkritikalitäten für Links des Telekommunikationsnetzes, und das Planen eines Links für eine Wartung oder zu einem Upgrade basierend auf den historischen Gesamtverkehrsklassenlinkkritikalitäten.

**9.** Verfahren nach einem der vorstehenden Ansprüche, wobei der Planungsalgorithmus einen strengen Prioritätsalgorithmus umfasst, in dem der gesamte Verkehr, der mit einer Verkehrsklasse assoziiert ist, die einen ersten Prioritätswert aufweist, für die Übertragung vor dem gesamten Verkehr geplant wird, der mit Verkehrsklassen assoziiert ist, die Prioritätswerte aufweisen, die niedriger als der erste Prioritätswert sind.

**10.** Verfahren nach einem der vorstehenden Ansprüche, wobei der Planungsalgorithmus einen gewichteten Fair-Queuing-Algorithmus umfasst, in dem Verkehr, der mit jeder Verkehrsklasse assoziiert ist, ein Anteil der Linkkapazität basierend auf den jeweiligen Prioritätswerten, die mit jeder Verkehrsklasse assoziiert sind, zugeordnet wird.

**11.** Verfahren nach einem der vorstehenden Ansprüche, wobei der Planungsalgorithmus eine ratenbegrenzende Funktion umfasst, die konfiguriert ist, um einen Anteil der Linkkapazität für jede Verkehrsklasse auf einen bestimmten Maximalwert zu begrenzen.

**12.** Verfahren nach einem der vorstehenden Ansprüche, wobei die Verkehrsklassenlinkkritikalität für eine spezielle Verkehrsklasse des ersten Links in Abhängigkeit von einer Verkehrsklassenlinknutzung für die spezielle Verkehrsklasse variiert, wobei die Verkehrsklassenlinknutzung ein Verhältnis zwischen der Verkehrsmenge, die mit der speziellen Verkehrsklasse assoziiert ist, die auf dem ersten Link fließt, und der Verkehrsklassenlinkkapazität für die spezielle Verkehrsklasse für den ersten Link ist.

**13.** Verfahren nach Anspruch 12, wobei die Verkehrsklassenlinkkritikalität für eine spezielle Verkehrsklasse des ersten Links in Abhängigkeit von einer Verkehrsklassenlinknutzung für die spezielle Verkehrsklasse bei einem nicht konstanten Gradienten zwischen einem ersten Wert bei einem ersten Wert der Nutzung und einem zweiten Wert bei einem zweiten Wert der Nutzung variiert, wobei der erste Wert der Verkehrsklassenlinkkritikalität kleiner als der zweite Wert der Verkehrsklassenlinkkritikalität ist und der erste Wert der Verkehrsklassenlinknutzung kleiner als der zweite Wert der Verkehrsklassenlinknutzung ist.

**14.** Netzverwaltungsknoten (900) zum Konfigurieren eines Telekommunikationsnetzes, das Telekommunikationsnetz umfassend eine Vielzahl von Knoten, wobei Paare von Knoten durch jeweilige Links verbunden sind, wobei jeder Link eine jeweilige Linkkapazität aufweist, wobei der über das Telekommunikationsnetz geleitete Verkehr mit einer von einer Vielzahl von Verkehrsklassen assoziiert ist, wobei jede Verkehrsklasse einen jeweiligen Prioritätswert aufweist, der Netzverwaltungsknoten umfassend eine Verarbeitungsschaltung (902) und ein nichtflüchtiges maschinenlesbares Medium (904), das Anweisungen speichert, die, wenn sie durch die Verarbeitungsschaltung ausgeführt werden, den Netzverwaltungsknoten zu Folgendem veranlassen:

a) Bestimmen einer Verkehrsmenge, die mit jeder Verkehrsklasse assoziiert ist, die auf einem ersten Link des Telekommunikationsnetzes fließt;
b) für jede Verkehrsklasse, Bestimmen einer Verkehrsklassenlinkkapazität, wobei die Verkehrsklassenlinkkapazität für eine spezielle Verkehrsklasse in Abhängigkeit von einer Differenz zwischen der Linkkapazität des ersten Links und der Kapazität, die anderen Verkehrsklassen auf dem ersten Link zugeordnet ist, gemäß einem Planungsalgorithmus basierend auf dem Prioritätswert der speziellen Verkehrsklasse und den Prioritätswerten der anderen Verkehrsklassen variiert;

c) für jede Verkehrsklasse, Bestimmen einer Verkehrsklassenlinkkritikalität des ersten Links in Abhängigkeit von der jeweiligen Verkehrsklassenlinkkapazität und einer Verkehrsmenge, die mit der Verkehrsklasse assoziiert ist, die auf dem ersten Link fließt;

d) Bestimmen einer oder mehrerer Gesamtverkehrsklassenlinkkritikalitäten für den ersten Link, wobei die Gesamtverkehrsklassenlinkkritikalität für eine spezielle Verkehrsklasse für den ersten Link in Abhängigkeit von einer Summe der Verkehrsklassenlinkkritikalitäten für eine oder mehrere Verkehrsklassen für den ersten Link variiert, wobei die eine oder die mehreren Verkehrsklassen mindestens die spezielle Verkehrsklasse und jede Verkehrsklasse der Vielzahl von Verkehrsklassen einschließen, für die die Verkehrsklassenlinkkapazität aufgrund des Planungsalgorithmus und des mit der speziellen Verkehrsklasse assoziierten Prioritätswerts variiert;

e) Wiederholen der Schritte a) bis d) für einen oder mehrere zweite Links des Telekommunikationsnetzes; und

f) Konfigurieren des Telekommunikationsnetzes basierend auf den Gesamtverkehrsklassenlinkkritikalitäten für den ersten Link und den einen oder die mehreren zweiten Links.

**15.** Computerprogrammprodukt, umfassend ein nichtflüchtiges maschinenlesbares Medium, das Anweisungen speichert, die, wenn sie durch eine Verarbeitungsschaltung eines Netzverwaltungsknotens ausgeführt werden, wobei der Netzverwaltungsknoten mit einem Telekommunikationsnetz gekoppelt ist, das Telekommunikationsnetz umfassend eine Vielzahl von Knoten, wobei Paare von Knoten durch jeweilige Links verbunden sind, wobei jeder Link eine jeweilige Linkkapazität aufweist, wobei der über das Telekommunikationsnetz geleitete Verkehr mit einer von einer Vielzahl von Verkehrsklassen assoziiert ist, wobei jede Verkehrsklasse einen jeweiligen Prioritätswert aufweist, den Netzverwaltungsknoten zu Folgendem veranlassen:

a) Bestimmen einer Verkehrsmenge, die mit jeder Verkehrsklasse assoziiert ist, die auf einem ersten Link des Telekommunikationsnetzes fließt;

b) für jede Verkehrsklasse, Bestimmen einer Verkehrsklassenlinkkapazität, wobei die Verkehrsklassenlinkkapazität für eine spezielle Verkehrsklasse in Abhängigkeit von einer Differenz zwischen der Linkkapazität des ersten Links und der Kapazität, die anderen Verkehrsklassen auf dem ersten Link zugeordnet ist, gemäß einem Planungsalgorithmus basierend auf dem Prioritätswert der speziellen Verkehrsklasse und den Prioritätswerten der anderen Verkehrsklassen variiert;

c) für jede Verkehrsklasse, Bestimmen einer Verkehrsklassenlinkkritikalität des ersten Links in Abhängigkeit von der jeweiligen Verkehrsklassenlinkkapazität und einer Verkehrsmenge, die mit der Verkehrsklasse assoziiert ist, die auf dem ersten Link fließt;

d) Bestimmen einer oder mehrerer Gesamtverkehrsklassenlinkkritikalitäten für den ersten Link, wobei die Gesamtverkehrsklassenlinkkritikalität für eine spezielle Verkehrsklasse für den ersten Link in Abhängigkeit von einer Summe der Verkehrsklassenlinkkritikalitäten für eine oder mehrere Verkehrsklassen für den ersten Link variiert, wobei die eine oder die mehreren Verkehrsklassen mindestens die spezielle Verkehrsklasse und jede Verkehrsklasse der Vielzahl von Verkehrsklassen einschließen, für die die Verkehrsklassenlinkkapazität aufgrund des Planungsalgorithmus und des mit der speziellen Verkehrsklasse assoziierten Prioritätswerts variiert; und

e) Wiederholen der Schritte a) bis d) für einen oder mehrere zweite Links des Telekommunikationsnetzes; und

f) Konfigurieren des Telekommunikationsnetzes basierend auf den Gesamtverkehrsklassenlinkkritikalitäten für den ersten Link und den einen oder die mehreren zweiten Links.

## Revendications

**1.** Procédé de configuration d'un réseau de télécommunication (106, 108, 204), le réseau de télécommunication comprenant une pluralité de noeuds, des paires de noeuds étant connectées par des liaisons respectives, chaque liaison ayant une capacité de liaison respective, dans lequel un trafic dirigé sur le réseau de télécommunication est associé à l'une parmi une pluralité de classes de trafic, chaque classe de trafic ayant une valeur de priorité respective, le procédé comprenant :

a) la détermination (300) d'une quantité de trafic associée à chaque classe de trafic circulant sur une première liaison du réseau de télécommunication ;

b) pour chaque classe de trafic, la détermination (302) d'une capacité de liaison de classe de trafic, la capacité de liaison de classe de trafic pour une classe de trafic particulière variant en fonction d'une différence entre la capacité de liaison de la première liaison et la capacité attribuée à d'autres classes de trafic sur la première liaison selon un algorithme de planification basé sur la valeur de priorité de la classe de trafic particulière et les

18

valeurs de priorité des autres classes de trafic ;

c) pour chaque classe de trafic, la détermination (304) d'une criticité de liaison de classe de trafic de la première liaison en fonction de la capacité de liaison de classe de trafic respective et d'une quantité de trafic associée à la classe de trafic circulant sur la première liaison ;

d) la détermination (306, 600, 800) d'une ou de plusieurs criticités globales de liaison de classe de trafic pour la première liaison, la criticité globale de liaison de classe de trafic pour une classe de trafic particulière pour la première liaison variant en fonction d'une somme des criticités de liaison de classe de trafic pour une ou plusieurs classes de trafic pour la première liaison, la ou les classes de trafic incluant au moins la classe de trafic particulière et chaque classe de trafic de la pluralité de classes de trafic pour lesquelles la capacité de liaison de classe de trafic varie selon l'algorithme de planification et la valeur de priorité associée à la classe de trafic particulière ;

e) la répétition des étapes a) à d) pour une ou plusieurs secondes liaisons du réseau de télécommunication ; et

f) la configuration (312) du réseau de télécommunication sur la base des criticités globales de liaison de classe de trafic pour la première liaison et de la ou des secondes liaisons.

2. Procédé selon la revendication 1, dans lequel la configuration du réseau de télécommunication comprend (606) l'attribution de trafic à des chemins sur le réseau de télécommunication en fonction des criticités globales de liaison de classe de trafic pour la première liaison et de la ou des secondes liaisons.

3. Procédé selon la revendication 2, dans lequel une demande de connectivité entre un premier noeud et un second noeud est attribuée au réseau de télécommunication, un trafic de la demande étant dirigé par l'intermédiaire d'au moins des premier et second chemins entre les premier et second noeuds, le premier chemin comprenant la première liaison et le second chemin comprenant une seconde liaison particulière, et dans lequel la configuration du réseau de télécommunication comprend le transfert (606) de trafic entre les premier et second chemins conformément aux criticités globales de liaison de classe de trafic pour la première liaison et la seconde liaison particulière.

4. Procédé selon la revendication 3, comprenant en outre la détermination d'une différence entre les criticités globales de liaison de classe de trafic pour la première liaison et les criticités globales de liaison de classe de trafic pour la seconde liaison particulière, et dans lequel le transfert du trafic entre les premier et second chemins comprend le transfert du trafic associé à une classe de trafic pour laquelle la différence de criticité globale de liaison de classe est la plus grande.

5. Procédé selon la revendication 3 ou 4, dans lequel le trafic de la demande est dirigé par l'intermédiaire d'au moins les premier et second chemins conformément à des poids respectifs attribués à chaque chemin, et le transfert du trafic comprend l'adaptation des poids respectifs.

6. Procédé selon l'une quelconque des revendications 3 à 5, comprenant en outre la détermination (602) d'une ou de plusieurs criticités globales de chemin de classe de trafic pour le premier chemin en additionnant les criticités globales de liaison de classe de trafic pour des liaisons appartenant au premier chemin, et la détermination d'une ou de plusieurs criticités globales de chemin de classe de trafic pour le second chemin en additionnant les criticités globales de liaison de classe de trafic pour des liaisons appartenant au second chemin, et dans lequel l'attribution de trafic à des chemins sur le réseau de télécommunication sur la base des criticités globales de liaison de classe de trafic pour la première liaison et de la ou des secondes liaisons comprend l'attribution de trafic à des chemins sur le réseau de télécommunication sur la base des criticités globales de chemin de classe de trafic pour les premier et second chemins.

7. Procédé selon l'une quelconque des revendications précédentes, dans lequel la configuration du réseau de télécommunication comprend la planification (804) d'une liaison pour la maintenance ou la mise à niveau sur la base de la ou des criminalités globales de classe de trafic.

8. Procédé selon la revendication 7, comprenant en outre le stockage (802) des criticités globales de liaison de classe de trafic pour la première liaison et de la ou des secondes liaisons dans une base de données comprenant des criticités historiques globales de liaison de classe de trafic pour des liaisons du réseau de télécommunication, et la planification d'une liaison pour la maintenance ou la mise à niveau sur la base des criticités historiques globales de liaison de classe de trafic.

9. Procédé selon l'une quelconque des revendications précédentes, dans lequel l'algorithme de planification comprend un algorithme de priorité stricte, dans lequel tout le trafic associé à une classe de trafic ayant une première valeur de priorité est planifié pour transmission avant tout trafic associé à des classes de trafic ayant des valeurs de priorité inférieures à la première valeur de priorité.

10. Procédé selon l'une quelconque des revendications précédentes, dans lequel l'algorithme de planification comprend un algorithme de mise en file d'attente équitable pondérée, dans lequel un trafic associé à chaque classe de trafic est attribué à un partage de la capacité de liaison sur la base des valeurs de priorité respectives associées à chaque classe de trafic.

11. Procédé selon l'une quelconque des revendications précédentes, dans lequel l'algorithme de planification comprend une fonction de limitation de débit, configurée pour limiter un partage de la capacité de liaison pour chaque classe de trafic à une valeur maximale déterminée.

12. Procédé selon l'une quelconque des revendications précédentes, dans lequel la criticité de liaison de classe de trafic pour une classe de trafic particulière de la première liaison varie en fonction d'une utilisation de liaison de classe de trafic pour la classe de trafic particulière, l'utilisation de liaison de classe de trafic étant un rapport entre la quantité de trafic associée à la classe de trafic particulière circulant sur la première liaison et la capacité de liaison de classe de trafic pour la classe de trafic particulière pour la première liaison.

13. Procédé selon la revendication 12, dans lequel la criticité de liaison de classe de trafic pour une classe de trafic particulière de la première liaison varie en fonction d'une utilisation de liaison de classe de trafic pour la classe de trafic particulière à un gradient non constant entre une première valeur à une première valeur de l'utilisation et une seconde valeur à une seconde valeur de l'utilisation, la première valeur de la criticité de liaison de classe de trafic étant inférieure à la seconde valeur de la criticité de liaison de classe de trafic et la première valeur de l'utilisation de liaison de classe de trafic étant inférieure à la seconde valeur de l'utilisation de liaison de classe de trafic.

14. Noeud de gestion de réseau (900) pour configurer un réseau de télécommunication, le réseau de télécommunication comprenant une pluralité de noeuds, des paires de noeuds étant reliées par des liaisons respectives, chaque liaison ayant une capacité de liaison respective, dans lequel un trafic dirigé sur le réseau de télécommunication est associé à l'une parmi une pluralité de classes de trafic, chaque classe de trafic ayant une valeur de priorité respective, le noeud de gestion de réseau comprenant une circuiterie de traitement (902) et un support non transitoire lisible par machine (904) stockant des instructions qui, lorsqu'elles sont exécutées par une circuiterie de traitement, amènent le noeud de gestion de réseau à :

a) déterminer une quantité de trafic associée à chaque classe de trafic circulant sur une première liaison du réseau de télécommunication ;
b) pour chaque classe de trafic, déterminer une capacité de liaison de classe de trafic, la capacité de liaison de classe de trafic pour une classe de trafic particulière variant en fonction d'une différence entre la capacité de liaison de la première liaison et la capacité attribuée à d'autres classes de trafic sur la première liaison selon un algorithme de planification basé sur la valeur de priorité de la classe de trafic particulière et les valeurs de priorité des autres classes de trafic ;
c) pour chaque classe de trafic, déterminer une criticité de liaison de classe de trafic de la première liaison en fonction de la capacité de liaison de classe de trafic respective et d'une quantité de trafic associée à la classe de trafic circulant sur la première liaison ;
d) déterminer une ou plusieurs criticités globales de liaison de classe de trafic pour la première liaison, la criticité globale de liaison de classe de trafic pour une classe de trafic particulière pour la première liaison variant en fonction d'une somme des criticités de liaison de classe de trafic pour une ou plusieurs classes de trafic pour la première liaison, la ou les classes de trafic incluant au moins la classe de trafic particulière et chaque classe de trafic de la pluralité de classes de trafic pour lesquelles la capacité de liaison de classe de trafic varie selon l'algorithme de planification et la valeur de priorité associée à la classe de trafic particulière ;
e) répéter les étapes a) à d) pour une ou plusieurs secondes liaisons du réseau de télécommunication ; et
f) configurer le réseau de télécommunication sur la base des criticités globales de liaison de classe de trafic pour la première liaison et de la ou des secondes liaisons.

15. Produit de programme informatique comprenant un support non transitoire lisible par machine stockant des instructions qui, lorsqu'elles sont exécutées par une circuiterie de traitement d'un noeud de gestion de réseau, le noeud de gestion de réseau étant couplée à un réseau de télécommunications, le réseau de télécommunication comprenant une pluralité de noeuds, avec des paires de noeuds reliées par des liaisons respectives, chaque liaison ayant une capacité de liaison respective, dans lequel le trafic dirigé sur le réseau de télécommunication est associé à l'une d'une pluralité de classes de trafic, chaque classe de trafic ayant une valeur de priorité respective, amènent le noeud de gestion de réseau à :

a) déterminer une quantité de trafic associée à chaque classe de trafic circulant sur une première liaison du réseau de télécommunication ;

b) pour chaque classe de trafic, déterminer une capacité de liaison de classe de trafic, la capacité de liaison de classe de trafic pour une classe de trafic particulière variant en fonction d'une différence entre la capacité de liaison de la première liaison et la capacité attribuée à d'autres classes de trafic sur la première liaison selon un algorithme de planification basé sur la valeur de priorité de la classe de trafic particulière et les valeurs de priorité des autres classes de trafic ;

c) pour chaque classe de trafic, déterminer une criticité de liaison de classe de trafic de la première liaison en fonction de la capacité de liaison de classe de trafic respective et d'une quantité de trafic associée à la classe de trafic circulant sur la première liaison ;

d) déterminer une ou plusieurs criticités globales de liaison de classe de trafic pour la première liaison, la criticité globale de liaison de classe de trafic pour une classe de trafic particulière pour la première liaison variant en fonction d'une somme des criticités de liaison de classe de trafic pour une ou plusieurs classes de trafic pour la première liaison, la ou les classes de trafic incluant au moins la classe de trafic particulière et chaque classe de trafic de la pluralité de classes de trafic pour lesquelles la capacité de liaison de classe de trafic varie selon l'algorithme de planification et la valeur de priorité associée à la classe de trafic particulière ; et

e) répéter les étapes a) à d) pour une ou plusieurs secondes liaisons du réseau de télécommunication ; et

f) configurer le réseau de télécommunication sur la base des criticités globales de liaison de classe de trafic pour la première liaison et de la ou des secondes liaisons.

Fig. 1

Fig. 2

EP 3 942 756 B1

Determine traffic flowing on *ith* link
300

Determine traffic class link capacity(ies)
302

Determine traffic class link criticality(ies)
304

Determine one or more overall traffic class link criticalities
306

More links to be analysed?
308

310

*i=i+1*

Yes

No

Configure network based on overall traffic class link criticalities
312

Fig. 3

$c_{k1}$ $c_{kh}$ $c_{k(h+1)}$ $c_{km}$

...   ...

402   S2

$c_1$ $c_k$ $c_{k+1}$ $c_n$

...   ...

S1

400

$c$

Fig. 4

Fig. 5a

EP 3 942 756 B1

Fig. 5b

Determine overall traffic class link criticalities

600

Determine overall traffic class path criticalities

602

Identify greatest difference in overall
traffic class path criticalities

604

Adjust weights of paths

606

Fig. 6

Fig. 7a

Fig. 7b

800 — Determine overall traffic class link criticalities

802 — Store in database of historical overall traffic class link criticalities

804 — Identify link(s) for upgrade and/or maintenance based on historical overall traffic class link criticalities

Fig. 8

900

904 — Memory

902 — Processing circuitry

906 — Interface(s)

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2017084207 W

### Non-patent literature cited in the description

- **JUNJIE ZHANG et al.** Optimizing Network Performance using Weighted Multipath Routing. *International Conference on Computer Communications and Networks,* 2012

- Balancing performance, robustness and flexibility in routing systems. **KIN-WAH KWONG et al.** IEEE TRANSACTIONS ON NETWORK AND SERVICE MANAGEMENT. IEEE, 01 September 2010, vol. 7, 186-199